# EUROPEAN PATENT SPECIFICATION

(11) **EP 3 653 453 B1**
(45) Date of publication and mention of the grant of the patent: **07.07.2021**
(21) Application number: 19207435.9
(22) Date of filing: 06.11.2019
(51) Int. Cl.: B60R 25/01, B60R 25/30

(54) **ANTI VEHICLE-MOUNTING APPARATUS**
FHRZEUG-ANTIKLETTERVORRICHTUNG
APPAREIL ANTI-ESCALADE DE VÉHICULE

(30) Priority: 13.11.2018 GB 201818447
(43) Date of publication of application: 20.05.2020
(73) Proprietor: Tailmaster (UK & Europe) Limited, Leamington, Spa Warwickshire CV32 4SQ (GB)
(72) Inventor: Barrington, Kevin, Leamington Spa, Warwickshire CV32 4SQ (GB)
(74) Representative: Hopley, Joanne Selina

(56) References cited:
- WO-A1-02/093521
- FR-A1- 2 470 017
- GB-A- 2 363 194
- US-B1- 8 814 180

## Description

The present invention is concerned with an anti vehicle-mounting apparatus that is configured to prevent a person from mounting a vehicle. More particularly, the present invention is concerned with an anti vehicle-mounting apparatus that can be removably attached to the rear of a trailer. The present invention is also concerned with a vehicle including an anti vehicle-mounting apparatus.

One of the approaches taken by illegal migrants wishing to travel between countries is to run behind, mount and enter the trailer of lorries. Despite lorry drivers not being aware that anyone has gained access to the trailer, lorry drivers may be fined or imprisoned if illegal migrants are found in their trailers.

Whilst attempts have been made to address this problem by providing sensors and cameras on the rear of a trailer and by improving the locking mechanisms on the trailer doors, the devices have not successfully prevented people from mounting and entering the trailers of vehicles and so there remains a need to deter people from mounting vehicles.

US Patent 8,814,180 describes a sheet material which can be towed behind a vehicle to enable heavy loads to be towed behind the vehicle.

According to a first aspect of the invention, there is provided an anti vehicle-mounting apparatus as defined by claim 1.

In use, the elongate sheet extends toward the ground to prevent people from running behind the vehicle and to prevent them mounting the vehicle in order to gain access to the trailer of the vehicle. The apparatus can be maintained in a stowed condition, in which the elongate sheet is wrapped around, or stowed within, the attachment member. When the apparatus is required, the elongate sheet can be unwrapped from, or removed from the attachment member and deployed for use. The attachment member may be attached to a lower portion of the rear of a vehicle, for example a lower portion of a rear bumper or an underside of a rear portion of the vehicle, such that the apparatus hangs close to the ground, in use. Importantly, it is not possible for people or articles to be retained on the elongate sheet while the vehicle is moving.

The apparatus may be configured such that the elongate sheet may be moved between the first, stowed, condition and the second, deployed, condition automatically. In this way, it is not necessary for the driver of the vehicle to exit the vehicle to deploy the elongate sheet.

The apparatus can be removed from the vehicle when it is not required and, for example, stored in the vehicle cab.

The attachment member may have a first, planar, surface and a second, curved, surface in which the first and second surfaces may provide a D-shaped cross section. The attachment member advantageously acts as a weight to ensure that the elongate sheet or mat is positioned close to the ground or road level during use of the apparatus.

The connector may include a shackle, for example a carabiner. The shackle does not twist, thereby preventing the elongate sheet or mat from twisting during use.

The connector may have a first portion that is fixedly attached to the second surface of the attachment member and a second portion that is configured for removable attachment to a vehicle.

The warning device may be mounted on the attachment member, for example on the second surface of the attachment member. Alternatively, the warning device may be mounted on the elongate sheet. The warning device may include a warning light. Additionally or alternatively, the warning device may include a vibration alert. The vibration alert may be configured to provide an audible alarm or siren. The audible alarm or siren may be a sound of at least 80 decibels, preferably at least 100 decibels, for example at 113 decibels. The warning device(s) advantageously deter people from attempting to run behind or mount the vehicle.

The elongate sheet may have a first portion having a first width and a second portion having a second width, the first width being greater than the second width. The first portion may be generally rectangular. The second portion may be generally triangular. In this way, the elongate sheet or mat is shaped to prevent the apparatus from getting trapped under the wheels at the rear of the vehicle.

Each of the first portion and the second portion may include a first, upper, surface and a second, lower, surface.

The upper surface of each of the first portion and/or the second portion may include a reflective coating or layer.

The second portion may include at least one narrow cut or opening or slit. The at least one narrow cut, opening or slit may extend in a direction that is perpendicular to the width of the second portion. The provision of narrow openings or slits in the elongate sheet or mat results in the formation of flaps which prevent people from balancing to stand or run on the sheet when it is positioned, in use, behind a moving vehicle.

The elongate sheet may extend from an opening in the attachment member. The attachment member may include a spring mechanism that is configured to control the extension of the elongate sheet from the opening of the attachment member when the apparatus is to be deployed and retraction of the elongate sheet into the opening when the apparatus is to be stowed. The motor controls the extension of the elongate sheet from the opening of the attachment member when the apparatus is to be deployed and retraction of the elongate sheet into the opening when the apparatus is to be stowed.

According to a further aspect of the present invention there is provided a vehicle including an anti vehicle-mounting apparatus as defined by the first aspect of the invention.

The anti vehicle-mounting apparatus may be universal such that it can be installed on any vehicle.

Examples according to the present invention will now be described with reference to the accompanying Figures, in which:
Figure 1 is a partial side plan view of a vehicle having an anti vehicle-mounting apparatus according to the present invention, the anti vehicle-mounting apparatus being in a first, stowed, condition;
Figure 2 is a partial rear plan view of the vehicle of Figure 1 with the anti vehicle-mounting apparatus in a second, deployed, condition;
Figure 3 is a top plan view of an anti vehicle-mounting apparatus;
Figure 4 is a bottom plan view of the anti vehicle-mounting apparatus of Figure 3;
Figure 5 is a partial side view of the anti vehicle-mounting apparatus of Figure 3;
Figure 6 is a top plan view of an anti vehicle-mounting apparatus according to a the present invention;
Figure 7 is a bottom plan view of the anti vehicle-mounting apparatus of Figure 6;
Figure 8 is a top view of the anti vehicle-mounting apparatus of Figure 6; and
Figure 9 is a partial side view of the anti vehicle-mounting apparatus of Figure 6.

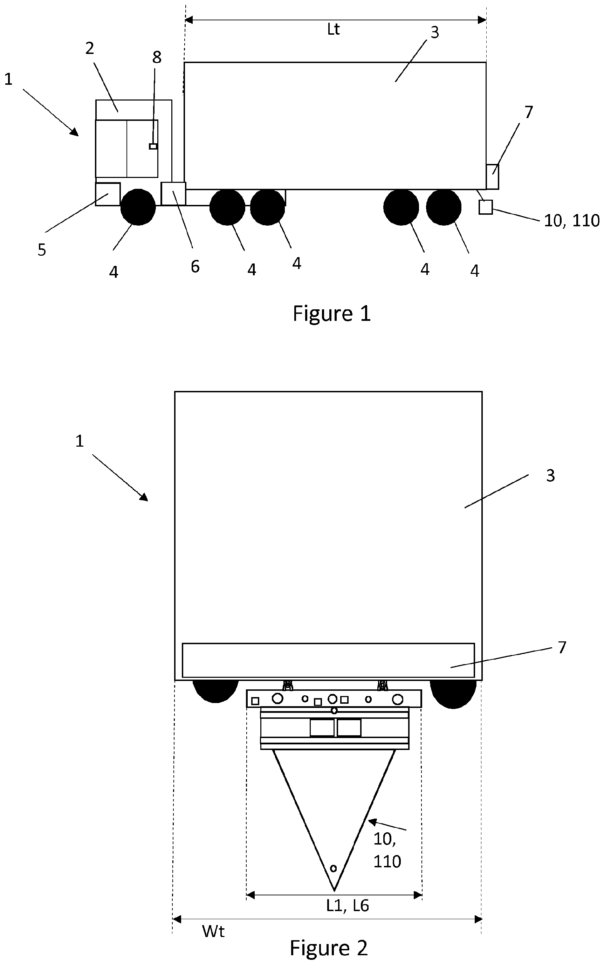

With reference to Figures 1 and 2 there is a vehicle 1, in the form of a lorry. The lorry has a cab 2, a trailer 3 and a plurality of wheels 4. The cab 2 is a compartment in which a person sits to drive the vehicle. The cab also has an engine 5 and a fuel tank 6. The trailer has a length Lt and a width Wt. A rear bumper 7 is mounted on the opposite end of the trailer 3 to the cab 2. An anti vehicle-mounting apparatus according to the present invention is attached to the underside of the trailer 3. A remote control transmitter, for example a radio frequency transmitter, 8 is provided in the cab 2.

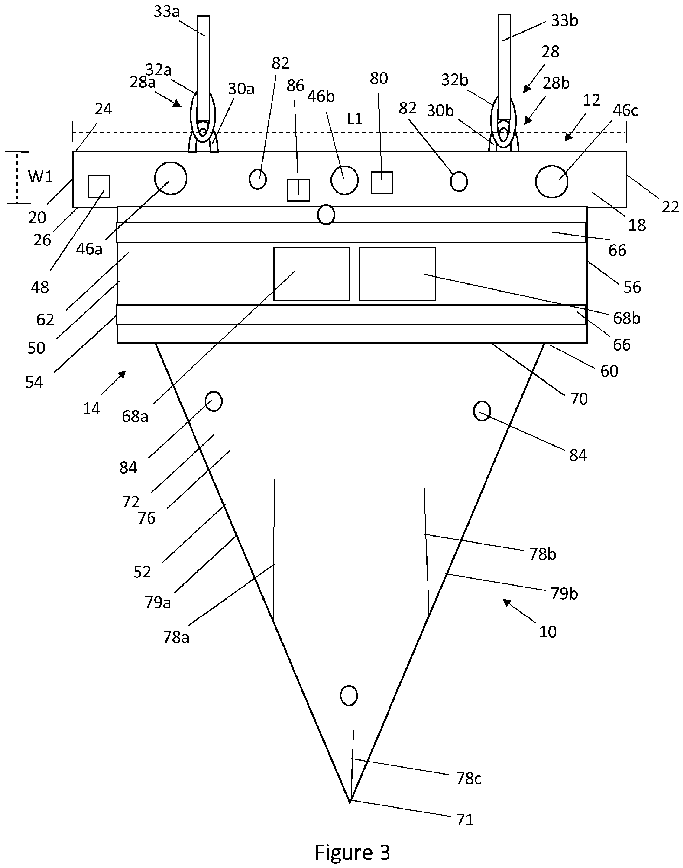

Examples of anti vehicle-mounting apparatus 10, 110 will now be described with reference to Figures 3 to 9.

Referring to Figures 3 to 5, there is shown an anti vehicle-mounting apparatus 10. The anti vehicle-mounting apparatus 10 has an attachment member or intrusion bar 12 in the form of a D-fender or D-section bumper and an elongate sheet or mat 14.

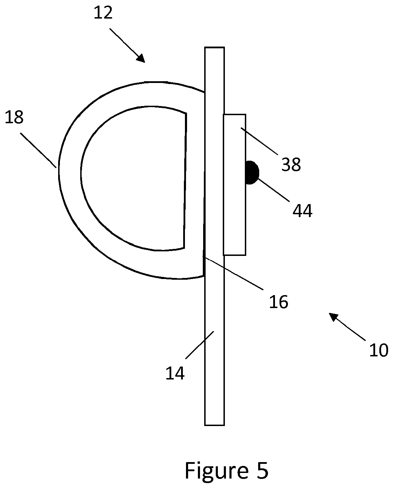

The attachment member 12 is manufactured from extruded rubber, for example poly vinyl chloride (PVC) or ethylene propylene diene monomer (EPDM). With particular reference to Figure 5, the attachment member 12 has a first, planar, surface 16 and a second, curved, surface 18 which together form a D-shaped cross section.

The attachment member 12 has a first end 20 and a second end 22, defining therebetween a length L1 of the attachment member 12. The attachment member 12 also has an upper portion 24 and a lower portion 26, defining therebetween a width W1 of the attachment member 12.

The attachment member 12 is configured for removable attachment to a vehicle 1 and, in particular, to the underside of a trailer 3 that is attached to a vehicle 1. In more detail, the attachment member 12 includes a connector 28 in the form of a pair of shackles or links 28a, 28b that are fixedly attached to the second surface 18 of the attachment member 12. The shackles 28a, 28b are manufactured from galvanised steel.

The shackle 28a has a first portion 30a in the form of a ring member that is fixedly attached to the second surface 18 of the attachment member 12. The shackle 28a also has a second portion 32a in the form of a carabiner that is linked to the first portion 30a and is configured for removable attachment to a vehicle via a strap or cable 33a. The shackle 28a is positioned towards the first end 20 of the attachment member 12.

In the same way, the shackle 28b has a first portion 30b in the form of a ring member that is fixedly attached to the second surface 18 of the attachment member 12. The shackle 28b also has a second portion 32b in the form of a carabiner that is linked to the first portion 30b and is configured for removable attachment to a vehicle via a strap or cable 33b. The shackle 28b is positioned towards the second end 22 of the attachment member 12.

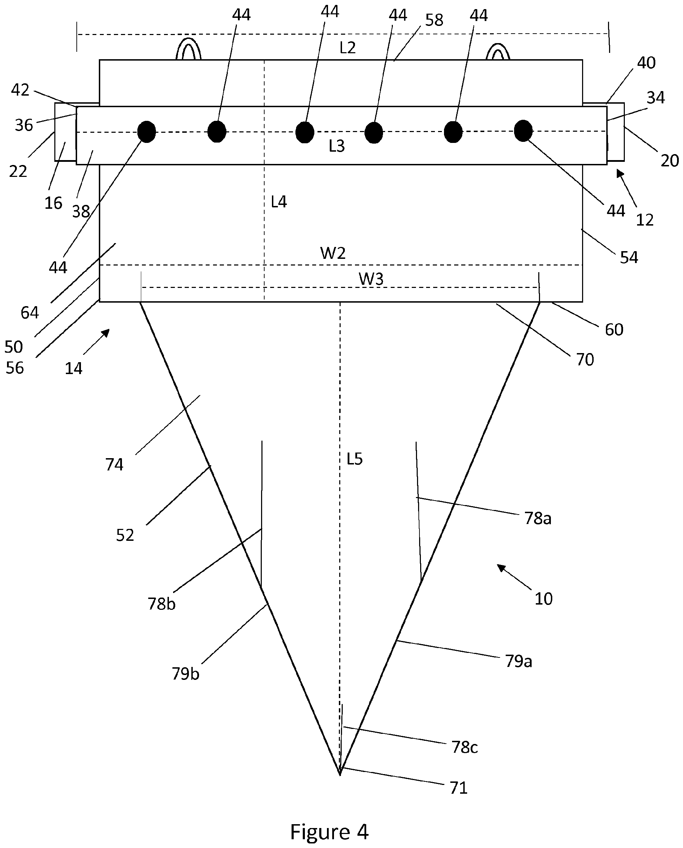

Referring now to Figure 4, the first surface 16 of the attachment member 12 includes a recessed portion (not shown). The recessed portion (not shown) has a first end 34 and a second end 36, defining therebetween a length L2 of the recessed portion (not shown).

The attachment member 12 also includes a mounting member 38 in the form of a galvanised steel plate. The mounting member 38 has a first end 40 and a second end 42, defining therebetween a length L3 of the mounting member 38. The length L3 of the mounting member 38 is substantially equal to the length L2 of the recessed portion (not shown), such that the mounting member 38 can be fixed within the recessed portion (not shown) of the attachment member 12, in use. In some examples of the invention, the mounting member 38 may include a trim (not shown) that extends around the periphery of the mounting member 38 and that is made from a rubber-containing material.

The attachment member 12 also includes one or more fasteners 44.

Referring again to Figure 3, the attachment member 12 includes a plurality of warning devices.

The plurality of warning devices include three hazard warning lights 46a, 46b, 46c in the form of light emitting diodes (LEDs). The warning lights 46a, 46b, 46c are encased in a shock resistant plastic housing (not shown) such that the warning lights 46a, 46b, 46c are waterproof and resistant to crushing. As will be appreciated, the warning lights 46a, 46b, 46c may emit light of any desired colour, for example red or amber, may be configurable to flash and may be powered by one or more batteries, for example one or more rechargeable batteries. Although this example includes three hazard warning lights, it will be appreciated that the attachment member 12 of the anti vehicle-mounting apparatus 10 may include any number of hazard warning lights 46a, 46b, 46c.

The attachment member 12 further includes a warning device in the form of a vibration alert 48. The vibration alert 48 is encased in a shock resistant plastic housing (not shown) such that the vibration alert 48 is waterproof and resistant to crushing. The vibration alert 48 may be configured to emit an audible alarm or siren in response to the detection of vibration. The audible alarm or siren may be a sound of at least 80 decibels, for example 113 decibels.

The attachment member 12 also includes a camera 80. The camera 80 is waterproof to prevent damage being caused to the camera 80 by water, for example rain, during use of the anti vehicle-mounting apparatus 10. The camera 80 includes at least one sensor (not shown) and is configured such that it is turned on in response to the detection of movement and/or the detection of an increase in the temperature (e.g. heat emanating from a person) and/or the detection of sound and/or the detection of light. The camera 80 is configured such that it is able to capture or record still images (photographs) and/or moving images (video). In some examples, the camera may be configured to transmit still and/or moving images to a screen within the cab 2 of the vehicle 1 to which the anti vehicle-mounting apparatus 10 is mounted.

The attachment member 12 includes two pilot lights 82. The pilot lights 82 are provided in a waterproof casing to prevent damage being caused to the pilot lights 82 by water, for example rain, during use of the anti vehicle-mounting apparatus 10. The pilot lights 82 include at least one sensor (not shown) and are configured such that they are turned on in response to the detection of movement and/or the detection of an increase in the temperature (e.g. heat emanating from a person) and/or the detection of sound and/or the detection of light. The pilot lights 82 may be configured such that they can switch between a first condition in which the lights 82 are continuously lit, a second condition in which the lights 82 are flashing and a third condition in which the lights 82 are not lit. The pilot lights 82 may also be configured to automatically turn off after a pre-set period of time, for example 2 minutes.

The attachment member 12 further includes a motion sensor or detector 86, for example a passive infrared sensor. As shown in Figure 3, the motion sensor 86 is positioned on the attachment member 12, adjacent to the hazard warning light 46b and the pilot light 82. The motion sensor 86 is configured to cause the hazard warning lights 46a, 46b, 46c and/or the vibration alert 48 and/or the camera 80 and/or the pilot lights 82, 84 to operate.

Whilst in the above example, the attachment member 12 of the anti vehicle-mounting apparatus 10 is described as including a plurality of different types of warning devices, including hazard warning lights 46a, 46b, 46c, a vibration alert 48, a camera 80, pilot lights 82 and a motion sensor 86, any number of each of these warning devices and/or any combination of each of these warning devices may be included on an anti vehicle-mounting apparatus 10 according to the present invention.

The elongate sheet or mat 14 is manufactured from a high quality rubber, for example EPDM. The elongate sheet 14 has a first mat portion 50 and a second mat portion 52.

The first mat portion 50 is generally rectangular. The first mat portion 50 has a first end 54 and a second end 56, defining therebetween a width W2. The first mat portion 50 also has an upper edge 58 and a lower edge 60, defining therebetween a length L4. The width W2 of the first mat portion 50 is greater than the length L4 of the first mat portion 50.

The first mat portion 50 has a first, upper, surface 62 and a second, lower, surface 64. The first, upper, surface 62 includes at least one reflective coating or layer 66. In this example, two reflective strips 66 are shown. It will be understood that the reflective coating or layer 66 may cover the upper surface 62, or may be applied in any pattern on the upper surface 62 of the first mat portion 50. The reflective strips 66 may be provided in the form of high visibility yellow or green reflective strips or tapes.

The first mat portion 50 includes two warning signs or notices 68a, 68b to highlight the danger of standing on the elongate sheet 14. It will be understood that any number of warning signs or notices may be provided on the anti vehicle-mounting apparatus 10.

The second mat portion 52 is generally triangular. The triangular mat portion 52 has a base 70, the length of which defines the width W3 of the second mat portion 52. The height of the triangular mat portion 52 defines the length L5 of the second mat portion 52. The triangular mat portion 52 has two legs 79a, 79b that extend from the base 70 to an apex 71 of the triangular mat portion 52. The apex 71 of the triangular mat portion 52 extends away from the vehicle such that the distance between the vehicle and the apex 71 of the triangular mat portion 52 is greater than the distance between the vehicle and the base 70 of the triangular mat portion 52.

The width W2 of the first mat portion 50 is greater than the width W3 of the second mat portion 52.

The second mat portion 52 has a first, upper, surface 72 and a second, lower, surface 74. The first, upper, surface 72 includes a reflective coating or layer 76. The reflective coating or layer 76 may cover the upper surface 72, or may be applied in a pattern (not shown) on the upper surface 72 of the second mat portion 52. The reflective layer 76 may be provided in the form of high visibility yellow or green reflective strips or tapes.

The second mat portion 52 includes at least one narrow opening or slit 78a, 78b, 78c. Each of the slits 78a, 78b, 78c extends in a direction that is perpendicular to the width W3 of the second mat portion 52. As shown in Figures 1 and 2, the slits 78a, 78b are provided in the legs 79a, 79b of the triangular mat portion 52. The slit 78c extends from the apex 71 of the triangular mat portion 52 toward the base 70 of the triangular mat portion 52. As shown in the Figures, the slits 78a, 78b are longer than the slit 78c. It will be understood that the relative lengths of the slits 78a, 78b, 78c could be varied, for example, each of the slits 78a, 78b, 78c may be a different length, or each of the slits 78a, 78b, 78c may be the same length. It will be understood that, in some examples of the invention, the slits are omitted.

The second mat portion 52 includes two pilot lights 84. The pilot lights 84 are provided in a waterproof casing to prevent damage being caused to the pilot lights 84 by water, for example rain, during use of the anti vehicle-mounting apparatus 10. The pilot lights 84 include at least one sensor (not shown) and are configured such that they are turned on in response to the detection of movement and/or the detection of an increase in the temperature (e.g. heat emanating from a person) and/or the detection of sound and/or the detection of light. The pilot lights 84 may be configured such that they can switch between a first condition in which the lights 84 are continuously lit, a second condition in which the lights 84 are flashing and a third condition in which the lights 84 are not lit. The pilot lights 84 may also be configured to automatically turn off after a pre-set period of time, for example 2 minutes. It will be understood that the pilot lights 84 may be included in any position on the second mat portion 52. Additionally, or alternatively, one or more pilot lights 84 may be included on the first mat portion 50.

As shown in Figures 3 and 4, the apex 71 of the triangular mat portion 52 is formed as a point. In some examples, the apex 71 of the triangular mat portion 52 may include a curved or arcuate portion.

Assembly of the anti vehicle-mounting apparatus 10 will now be described.

The bar of the attachment member 12 is extruded from a high quality rubber, for example EPDM. The connector 28 is attached to the second surface 18 of the attachment member 12 as follows. The ring member 30a of the shackle 28a is fixedly attached to the second surface 18 of the attachment member 12. The carabiner 32a is then fastened to the ring member 30a and a strap 33a is fastened to the carabiner 32a. In the same way, the ring member 30b of the shackle 28b is fixedly attached to the second surface 18 of the attachment member 12. The carabiner 32b is then fastened to the ring member 30b and a strap 33b is fastened to the carabiner 32b.

The warning devices, in this example three hazard warning lights 46a, 46b, 46c a vibration alert 48 and the pilot lights 82, are then mounted to the attachment member 12. The camera 80 and the motion sensor 85 are also attached or mounted to the attachment member 12.

The first and second mat portions 50, 52 of the elongate sheet or mat 14 are manufactured from a high quality rubber, for example EPDM. The sheets of the first and second mat portions 50, 52 have a thickness of approximately 0.75 to 2.50 millimetres. This ensures that the elongate sheet or mat 14 is tough and cannot easily be cut.

The reflective layers 66 and the warning signs 68a, 68b are applied to the upper surface 62 of the first mat portion 50. Similarly, the reflective layers 76 and the pilot lights 84 are applied to the upper surface 72 of the second mat portion 52. Narrow openings or slits 78a, 78b, 78c are formed in the second mat portion 52 and the base 70 of the second mat portion 52 is attached to the lower edge 60 of the first mat portion 50.

The elongate sheet 14 is then mounted between the recessed portion (not shown) of the attachment member 12 and the mounting member 38. The fasteners 44 are used to clamp the mounting member 38 to the attachment member 12 in order to secure the elongate sheet 14 to the attachment member 12. It will be appreciated that any suitable fasteners may be used to clamp the mounting member 38 to the attachment member 12. In some examples of the invention, for example, the fasteners 44 may be hand grip/tightening handles with spring washers. In Figure 4, six fasteners 44 are shown. It will be understood that any suitable number of fasteners may be used to clamp the mounting member 38 to the attachment member 12.

The anti vehicle-mounting apparatus 10 has a stowed condition (as shown in Figure 1) and a deployed condition (as shown in Figure 2). When the apparatus 10 is in the stowed condition, the elongate sheet or mat 14 is wrapped around the attachment member 12, for example for storage. When the apparatus 10 is in the deployed condition, the elongate sheet is unwrapped from around the attachment member 12, allowing the attachment member 12 to be mounted at the rear of a vehicle for use.

With the apparatus 10 in the deployed condition, the attachment member 12 can be attached to the rear of a vehicle 1 via the straps 33a, 33b of the connector 28, as shown in Figure 1. The attachment member 12 may, for example, be attached to a lower portion at the rear of a vehicle, e.g. the underside of the trailer 3. The attachment member 12 is thus hung from the rear of the vehicle and the weight of the attachment member 12 causes the attachment member 12 to extend toward the ground or road surface. The apparatus 10 is designed such that the attachment member 12 is positioned approximately 15 to 25 centimetres above the road surface. In use, the elongate sheet or mat 14 extends along the ground or road away from the attachment member 12. The arrangement of the connector 28 with the ring members 30a, 30b and the shackles 28a, 28b advantageously prevents the elongate sheet or mat 12 twisting during operation of the anti vehicle-mounting apparatus 10. The length L1 of the attachment member 12 is less than the width Wt of the trailer such that, in use, the elongate sheet or mat 14 is spaced apart from the rear wheels 4 of the vehicle 1. The width Wt of the trailer may, for example, be 2.55 metres and the length L1 of the attachment member 12 may be, for example, 1.50 metres.

The length of the elongate sheet or mat 14 can be adjusted by loosening the fasteners 44 and sliding the first mat portion 50 relative to the attachment member 12 and the mounting member 38. When the elongate sheet or mat 14 is in the desired position, the elongate sheet 14 can be clamped in position by tightening the fasteners 44.

The apparatus 10 is designed to be used when the vehicle 1 is to be driven slowly through a town or village. Upon entry to the town or village, the driver can stop, remove the apparatus 10 from the cab 2 of the vehicle 1 and install the apparatus 10 on the rear of the vehicle 1 as described above.

Once the apparatus 10 is attached to the rear of the vehicle, the vehicle 1 can be driven such that the elongate sheet or mat 14 extends from the rear of the vehicle 1.

The warning devices deter a person from attempting to run behind the vehicle 1.

In the event a person does attempt to run behind the vehicle 1 and mount it, the elongate sheet or mat 14 prevents a person balancing at the rear of the vehicle 1 long enough to unlock the trailer. In this way, the apparatus 10 deters people from running behind and mounting vehicles to which the apparatus 10 is attached.

When the apparatus 10 is no longer required, the driver can stop the vehicle 1, remove the apparatus 10 from the rear of the vehicle 1, stow the elongate sheet or mat 14 around the attachment member 12, and store the apparatus 10 in the cab 2 of the vehicle 1.

The apparatus 10 may be provided as a kit including an attachment member 12, an elongate sheet 14 and a number of fasteners 44. The kit of parts is, therefore, easily portable and can be carried between the cab 2 of the vehicle 1 and the rear of the vehicle 1 by the driver, as required.

The attachment member 12 may include one or more handles (not shown) to facilitate the transfer or movement of the apparatus 10 between different locations, such as between the inside and outside of the vehicle 1, for example by a driver of the vehicle 1, when the apparatus 10 is in the stowed condition.

Additionally, or alternatively, a bag or case (not shown) may be provided to store the apparatus 10. The bag or case (not shown) may include one or more handles to facilitate the movement of the apparatus 10 between different locations when the apparatus 10 is in the stowed condition.

In the example described above, the elongate sheet or mat 14 is clamped to the attachment member 12 and is stowed by simply wrapping the elongate sheet 14 around the attachment member 12. In embodiments of the invention, the elongate sheet 14 may extend from an opening (not shown) in the attachment member 12. In such an embodiment, the attachment member 12 may include a spring mechanism (not shown) that is configured to control the extension of the elongate sheet 14 from the opening (not shown) of the attachment member 12 and retraction of the elongate sheet 14 into the opening (not shown). The attachment member 12 includes an electric motor (not shown) that is configured to control the extension of the elongate sheet 14 from the opening (not shown) of the attachment member 12 and retraction of the elongate sheet 14 into the opening (not shown).

In the example described above, the attachment member 12 has a D-shaped cross section. It will be understood that, in alternative examples, the attachment member may have a cross section that is any shape and/or may be hollow or solid.

In the example described above, the attachment member 12 can be attached to the rear of a vehicle via the straps 33a, 33b of the connector 28. It will be understood that, in alternative examples, the attachment member may be attached to the rear of a vehicle via galvanised brackets or chain links or any other suitable connection means.

In the example above described, the second mat portion 52 is triangular. It will be understood that, in alternative examples, the second mat portion may be any shape or size, so long as it is sized and/or shaped to prevent the apparatus from getting trapped under the wheels at the rear of the vehicle.

In the example described above, the first mat portion 50 includes two warning signs or notices 68a, 68b to highlight the danger of standing on the elongate sheet 14. It will be understood that any number of warning signs or notices may be provided on the anti vehicle-mounting apparatus 10. It will also be understood that the hazard or warning signs or notices may be provided on other parts of the anti vehicle-mounting apparatus 10. Hazard or warning signs or notices may, for example be provided on the attachment member 12 and/or the first mat portion 50 and/or the second mat portion 52.

In the example described above, two pilot lights 82 are provided on the attachment member 12 and two pilot lights 84 are provided on the second mat portion 52 of the mat 14. It will be understood that any number of pilot lights may be provided and that the pilot lights could be provided on the attachment member 12 and/or the mat 14. Furthermore, the pilot lights could be provided on the first mat portion 50 of the mat 14 and/or the second mat portion 52 of the mat 14.

In the example described above, a connector 28 with ring members 30a, 30b and shackles 28a, 28b is provided to prevent the elongate sheet or mat 12 twisting during operation of the anti vehicle-mounting apparatus 10. It will be understood that, in alternative examples, alternative connectors may be provided to prevent the elongate sheet or mat 12 twisting during operation of the anti vehicle-mounting apparatus 10. Alternative mechanisms for preventing the mat becoming twisted may also be provided on the anti vehicle-mounting apparatus 10.

In the example described, fasteners 44 are provided to clamp the mounting member 38 to the attachment member 12 in order to secure the elongate sheet 14 to the attachment member 12. It will be understood that the fastener 44 may be configured such that they can be used as grip handles for carrying the apparatus 10 and/ or feet for resting the apparatus 10 on the ground when the apparatus 10 is in the stowed condition and not mounted on a vehicle 1.

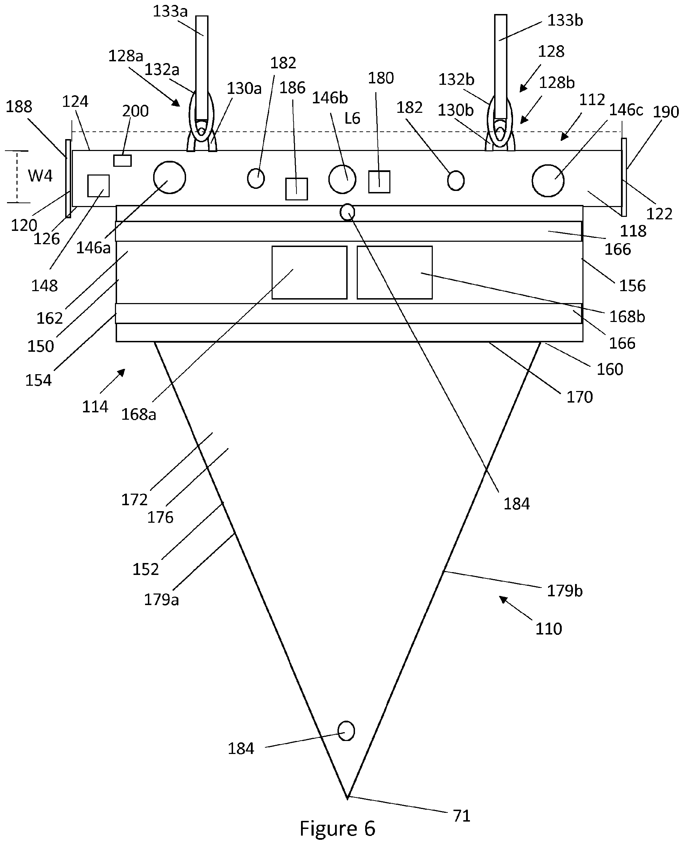

An anti vehicle-mounting apparatus 110 according to an embodiment of the present invention will now be described with reference to Figures 6 to 9. The anti vehicle-mounting apparatus 110 has an attachment member or intrusion bar 112 and an elongate sheet or mat 114. The anti vehicle-mounting apparatus 110 also has a roller 192 and a motor 198. The roller includes a spring mechanism (not shown) and a built in battery, for example a lithium battery (not shown).

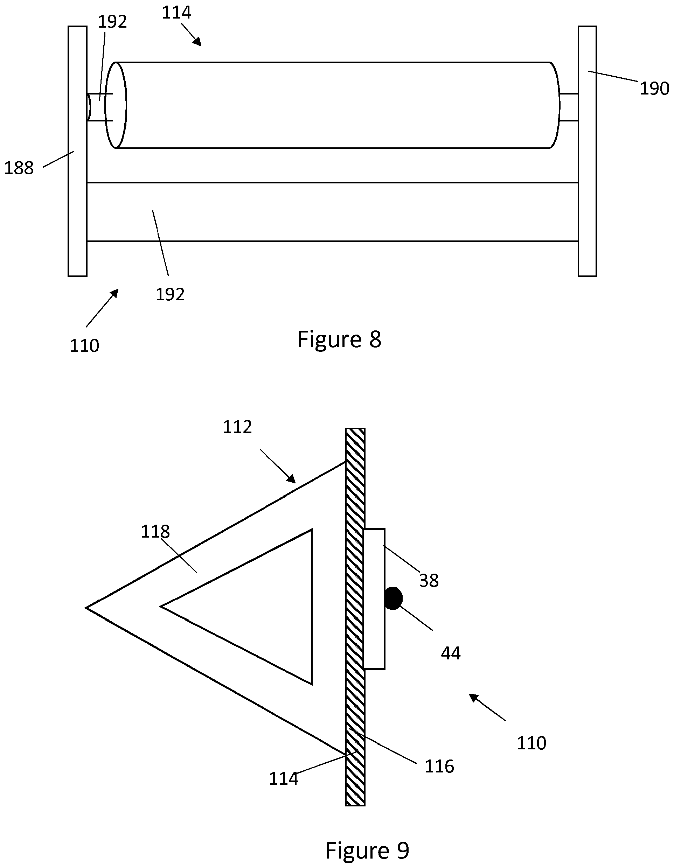

The attachment member 112 is manufactured from extruded rubber, for example PVC or EPDM. With particular reference to Figure 9, the attachment member 112 has a first, planar, surface 116 and a second, angular, surface 118 which together form a triangular-shaped cross section.

The attachment member 112 has a first end 120 and a second end 122, defining therebetween a length L6 of the attachment member 112. The attachment member 112 also has an upper portion 124 and a lower portion 126, defining therebetween a width W4 of the attachment member 112. A first bracket 188 is provided at the first end 120 of the attachment member 112 and a second bracket 190 is provided at the second end 122 of the attachment member 112.

The attachment member 112 is configured for removable attachment to a vehicle 1 and, in particular, the underside of a trailer 3 that is attached to a vehicle 1. In more detail, the attachment member 112 includes a connector 128 in the form of a pair of shackles or links 128a, 128b that are fixedly attached to the second surface 118 of the attachment member 112. The shackles 128a, 128b are manufactured from galvanised steel.

The shackle 128a has a first portion 130a in the form of a ring member that is fixedly attached to the second surface 118 of the attachment member 112. The shackle 128a also has a second portion 132a in the form of a carabiner that is linked to the first portion 130a and is configured for removable attachment to a vehicle 1 via a strap or cable 133a. The shackle 128a is positioned towards the first end 120 of the attachment member 112.

In the same way, the shackle 128b has a first portion 130b in the form of a ring member that is fixedly attached to the second surface 118 of the attachment member 112. The shackle 128b also has a second portion 132b in the form of a carabiner that is linked to the first portion 130b and is configured for removable attachment to a vehicle 1 via a strap or cable 133b. The shackle 128b is positioned towards the second end 122 of the attachment member 112.

The roller 192 has a first end 194 and a second end 196, defining therebetween a length L7 of the roller 192.

Referring again to Figure 6, the attachment member 112 includes a plurality of warning devices.

The plurality of warning devices includes three hazard warning lights 146a, 146b, 146c in the form of light emitting diodes (LEDs). The warning lights 146a, 146b, 146c are encased in a shock resistant plastic housing (not shown) such that the warning lights 146a, 146b, 146c are waterproof and resistant to crushing. As will be appreciated, the warning lights 146a, 146b, 146c may emit light of any desired colour, for example red or amber, may be configurable to flash and may be powered by one or more batteries, for example one or more rechargeable batteries. Although the embodiment of the invention described herein includes three hazard warning lights, it will be appreciated that the attachment member 112 of the anti vehicle-mounting apparatus 110 may include any number of hazard warning lights 146a, 146b, 146c.

The attachment member 112 further includes a warning device in the form of a vibration alert 148. The vibration alert 148 is encased in a shock resistant plastic housing (not shown) such that the vibration alert 148 is waterproof and resistant to crushing. The vibration alert 148 may be configured to emit an audible alarm or siren in response to the detection of vibration. The audible alarm or siren may be a sound of at least 80 decibels, for example 113 decibels.

The attachment member 112 also includes a camera 180. The camera 180 is waterproof to prevent damage being caused to the camera 180 by water, for example rain, during use of the anti vehicle-mounting apparatus 110. The camera 180 includes at least one sensor (not shown) and is configured such that it is turned on in response to the detection of movement and/or the detection of an increase in the temperature (e.g. heat emanating from a person) and/or the detection of sound and/or the detection of light. The camera 180 is configured such that it is able to capture or record still images (photographs) and/or moving images (video). In some embodiments, the camera may be configured to transmit still and/or moving images to a screen within the cab 2 of a vehicle 1 to which the anti vehicle-mounting apparatus 110 is mounted.

The attachment member 112 includes two pilot lights 182. The pilot lights 182 are provided in a waterproof casing to prevent damage being caused to the pilot lights 182 by water, for example rain, during use of the anti vehicle-mounting apparatus 110. The pilot lights 182 include at least one sensor (not shown) and are configured such that they are turned on in response to the detection of movement and/or the detection of an increase in the temperature (e.g. heat emanating from a person) and/or the detection of sound and/or the detection of light. The pilot lights 182 may be configured such that they can switch between a first condition in which the lights 182 are continuously lit, a second condition in which the lights 182 are flashing and a third condition in which the lights 182 are not lit. The pilot lights 182 may also be configured to automatically turn off after a pre-set period of time, for example 2 minutes. It will be understood that, in alternative embodiments of the invention, any number of pilot lights 182 may be proved on the attachment member 112. Alternatively, the pilot lights 182 may be omitted.

The attachment member 112 further includes a motion sensor or detector 186, for example a passive infrared sensor. As shown in Figure 6, the motion sensor 186 is positioned on the attachment member 112, adjacent to the hazard warning light 146b and the pilot light 182. The motion sensor 186 is configured to cause the hazard warning lights 146a, 146b, 146c and/or the vibration alert 148 and/or the camera 180 and/or the pilot lights 182, 184 to operate.

Whilst in this embodiment of the invention, the attachment member 112 of the anti vehicle-mounting apparatus 110 is described as including a plurality of different types of warning devices, including hazard warning lights 146a, 146b, 146c, a vibration alert 148, a camera 180, pilot lights 182 and a motion sensor 186, any number of each of these warning devices and/or any combination of each of these warning devices may be included on an anti vehicle-mounting apparatus 110 according to the present invention. The attachment member 112 includes an antenna 200 as will be described below.

The elongate sheet or mat 114 is manufactured from a high quality rubber, for example EPDM. The elongate sheet 114 has a first mat portion 150 and a second mat portion 152.

The first mat portion 150 is generally rectangular. The first mat portion 150 has a first end 154 and a second end 156, defining therebetween a width W5. The first mat portion 150 also has an upper edge 158 and a lower edge 160, defining therebetween a length L8. The width W5 of the first mat portion 150 is greater than the length L8 of the first mat portion 150.

The first mat portion 150 has a first, upper, surface 162 and a second, lower, surface 164. The first, upper, surface 162 includes at least one reflective coating or layer 166. In this embodiment, two reflective strips 166 are shown. It will be understood that the reflective coating or layer 166 may cover the upper surface 162, or may be applied in any pattern on the upper surface 162 of the first mat portion 150. The reflective strips 166 may be provided in the form of high visibility yellow or green reflective strips or tapes.

The first mat portion 150 includes two warning signs or notices 168a, 168b to highlight the danger of standing on the elongate sheet 114. It will be understood that any number of warning signs or notices may be provided on the anti vehicle-mounting apparatus 110.

A pilot light 184 is provided on the first mat portion 150. The pilot light 184 is provided in a waterproof casing to prevent damage being caused to the pilot light 184 by water, for example rain, during use of the anti vehicle-mounting apparatus 110. The pilot light 184 includes at least one sensor (not shown) and is configured such that it is turned on in response to the detection of movement and/or the detection of an increase in the temperature (e.g. heat emanating from a person) and/or the detection of sound and/or the detection of light. The pilot light 184 may be configured such that it can switch between a first condition in which the light 184 is continuously lit, a second condition in which the light 184 is flashing and a third condition in which the light 184 is not lit. The pilot light 184 may also be configured to automatically turn off after a pre-set period of time, for example 2 minutes. Although only one pilot light 184 is shown on the first mat portion 150, it will be understood that any number of pilot lights 184 may be included on the first mat portion 150. Alternatively, no pilot lights 184 may be provided on the first mat portion 150.

The second mat portion 152 is generally triangular. The triangular mat portion 152 has a base 170, the length of which defines the width W6 of the second mat portion 152. The height of the triangular mat portion 152 defines the length L9 of the second mat portion 152. The triangular mat portion 152 has two legs 179a, 179b that extend from the base 170 to an apex 171 of the triangular mat portion 152. The apex 171 of the triangular mat portion 152 extends away from the vehicle 1 such that the distance between the vehicle 1 and the apex 171 of the triangular mat portion 152 is greater than the distance between the vehicle 1 and the base 170 of the triangular mat portion 152.

The width W5 of the first mat portion 150 is greater than the width W6 of the second mat portion 152.

The second mat portion 152 has a first, upper, surface 172 and a second, lower, surface 174. The first, upper, surface 172 includes a reflective coating or layer 176. The reflective coating or layer 176 may cover the upper surface 712, or may be applied in a pattern (not shown) on the upper surface 172 of the second mat portion 152. The reflective layer 176 may be provided in the form of high visibility yellow or green reflective strips or tapes.

The second mat portion 152 includes a pilot light 184. The pilot light 184 is provided in a waterproof casing to prevent damage being caused to the pilot light 184 by water, for example rain, during use of the anti vehicle-mounting apparatus 110. The pilot light 184 includes at least one sensor (not shown) and is configured such that it is turned on in response to the detection of movement and/or the detection of an increase in the temperature (e.g. heat emanating from a person) and/or the detection of sound and/or the detection of light. The pilot light 184 may be configured such thatit can switch between a first condition in which the light 184 is continuously lit, a second condition in which the light 184 is flashing and a third condition in which the light 184 is not lit. The pilot lights 184 may also be configured to automatically turn off after a pre-set period of time, for example 2 minutes. Although only one pilot light 184 is shown on the second mat portion 152, it will be understood that any number of pilot lights 184 may be included on the second mat portion 152. Alternatively, no pilot lights 184 may be provided on the second mat portion 152.

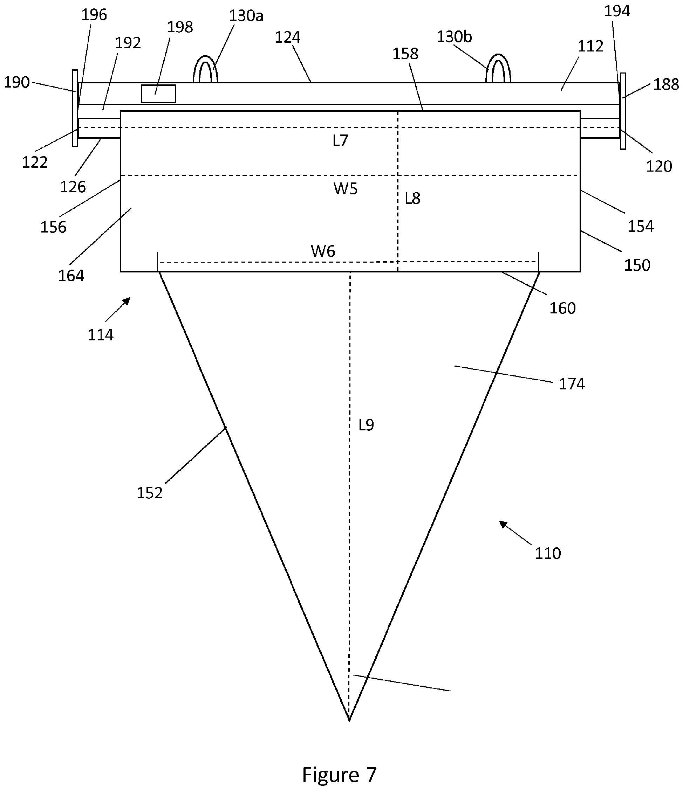

As shown in Figures 6 and 7, the apex 171 of the triangular mat portion 152 is formed as a point. In alternative embodiments of the invention, the apex 171 of the triangular mat portion 152 may include a curved or arcuate portion.

Assembly of the anti vehicle-mounting apparatus 110 will now be described.

The bar of the attachment member 112 is extruded from a high quality rubber, for example EPDM. The connector 128 is attached to the second surface 118 of the attachment member 112 as follows. The ring member 130a of the shackle 128a is fixedly attached to the second surface 118 of the attachment member 112. The carabiner 132a is then fastened to the ring member 130a and a strap 133a is fastened to the carabiner 132a. In the same way, the ring member 130b of the shackle 128b is fixedly attached to the second surface 118 of the attachment member 112. The carabiner 132b is then fastened to the ring member 130b and a strap 133b is fastened to the carabiner 132b.

The warning devices, in this example three hazard warning lights 146a, 146b, 146c a vibration alert 148 and the pilot lights 182, are then mounted to the attachment member 112. The camera 180, the motion sensor 185, the motor 198 and the antenna 200 are also attached or mounted to the attachment member 112.

The first and second mat portions 150, 152 of the elongate sheet or mat 114 are manufactured from a high quality rubber, for example EPDM. The sheets of the first and second mat portions 150, 152 have a thickness of approximately 0.75 to 2.5 millimetres. This ensures that the elongate sheet or mat 114 is tough and cannot easily be cut.

The reflective layers 166 and the warning signs 168a, 168b are applied to the upper surface 162 of the first mat portion 150. Similarly, the reflective layers 176 and the pilot lights 184 are applied to the upper surface 172 of the second mat portion 152. Narrow openings or slits 178a, 178b, 178c are formed in the second mat portion 152 and the base 170 of the second mat portion 152 is attached to the lower edge 160 of the first mat portion 150.

The upper edge 158 of the elongate sheet 114 is then attached or fixed to the roller 192. The elongate sheet 114 is wound around the roller 192. The roller 192 is then rotatably mounted between the first bracket 188 and the second bracket 190. The attachment member is fixedly mounted between the first bracket 188 and the second bracket 190.

The anti vehicle-mounting apparatus 110 has a stowed condition and a deployed condition. When the apparatus 110 is in the stowed condition, the elongate sheet or mat 114 is wrapped around the roller 192. When the apparatus 110 is in the deployed condition, the elongate sheet 114 is unwound from the roller 192. The spring mechanism (not shown) of the roller 192 and the motor 198 operate to enable the apparatus 110 to be moved between the stowed condition and the deployed condition.

The apparatus 110 is attached to a vehicle 1 as follows. The attachment member 112 is attached to the rear of a vehicle a via the straps 133a, 133b of the connector 128 as shown in Figure 1. The attachment member 112 may, for example, be attached to a lower portion at the rear of a vehicle 1, e.g. an underside of the trailer 3. The attachment member 112 is thus hung from the rear of the vehicle 1 and the weight of the attachment member 112 causes the attachment member 112 to extend toward the ground or road surface. The apparatus 110 is designed such that the attachment member 112 is positioned approximately 15 to 25 centimetres above the road surface. In use, the elongate sheet or mat 114 extends along the ground or road away from the attachment member 112. The arrangement of the connector 128 with the ring members 130a, 130b and the shackles 128a, 128b advantageously prevents the elongate sheet or mat 114 twisting during operation of the anti vehicle-mounting apparatus 110. The length L6 of the attachment member 112 is less than the width Wt of the trailer such that, in use, the elongate sheet or mat 114 is spaced apart from the rear wheels 4 of the vehicle 1. The width Wt of the trailer may, for example, be 2.55 metres and the length L6 of the attachment member 112 may be, for example, 1.50 metres.

The length of the elongate sheet or mat 114 can be adjusted by operation of the motor 198 and spring mechanism (not shown) of the roller 192. When the elongate sheet or mat 114 is in the desired position, the elongate sheet 114 can be held in position by the spring mechanism (not shown).

A rechargeable battery, solar panels or other means for power generation (not shown) is provided for the motor 198 of the roller 192. The antenna 200 allows remote control of the apparatus 110, for example by the driver from the cab 2 of the vehicle 1.

The apparatus 110 is designed to be used when the vehicle 1 is to be driven slowly through a town or village. Upon entry to the town or village, the driver can use a controller (not shown) within the cab 2 to deploy the apparatus 110 such that the elongate sheet or mat 114 extends from the rear of the vehicle 1. As the vehicle 1 is driven, the elongate sheet or mat 114 extends behind the vehicle 1.

The warning devices deter a person from attempting to run behind the vehicle 1.

In the event a person does attempt to run behind the vehicle 1 and mount it, the elongate sheet or mat 114 prevents a person balancing at the rear of the vehicle long enough to unlock the trailer. In this way, the apparatus 110 deters people from running behind and mounting vehicles to which the apparatus 110 is attached.

When the apparatus 110 is no longer required, the driver can use the controller (not shown) within the cab 2 to operate the roller 192 within the apparatus 110 to stow the elongate sheet or mat 114 around the roller 192. The vehicle 1 can be driven with the apparatus 110 in the stowed condition. If desired, the driver can stop the vehicle 1, remove the apparatus 110 from the rear of the vehicle 1 and stow the apparatus within the cab 2 of the vehicle 1.

The apparatus 110 may be provided as a kit including an attachment member 112, an elongate sheet 114 and a roller 192. The kit of parts is, therefore, easily portable and can be carried between the cab 2 of the vehicle 1 and the rear of the vehicle 1 by the driver, as required.

The attachment member 112 may, in some embodiments of the invention, include one or more handles (not shown) to facilitate the transfer or movement of the apparatus 110 between different locations, such as between the inside and outside of the vehicle 1, for example by a driver of the vehicle 1, when the apparatus 110 is in the stowed condition.

Additionally, or alternatively, a bag or case (not shown) may be provided to store the apparatus 110. The bag or case (not shown) may include one or more handles to facilitate the movement of the apparatus 110 between different locations when the apparatus 110 is in the stowed condition.

In this embodiment of the invention, the attachment member 112 has a triangular-shaped cross section. It will be understood that, in alternative embodiments of the invention, the attachment member may have a cross section that is any shape and/or may be hollow or solid.

In this embodiment of the invention, the attachment member 12 can be attached to the rear of a vehicle via the straps 133a, 133b of the connector 128. It will be understood that, in alternative embodiments of the invention, the attachment member may be attached to the rear of a vehicle via galvanised brackets or chain links or any other suitable connection means to prevent twisting of the elongate sheet 114 during use of the apparatus 110.

In this embodiment of the invention, the second mat portion 152 is triangular. It will be understood that, in alternative embodiments of the invention, the second mat portion may be any shape or size, so long as it is sized and/or shaped to prevent the apparatus from getting trapped under the wheels at the rear of the vehicle.

In this embodiment of the invention, the first mat portion 150 includes two warning signs or notices 168a, 168b to highlight the danger of standing on the elongate sheet 114. It will be understood that any number of warning signs or notices may be provided on the anti vehicle-mounting apparatus 110. It will also be understood that the hazard or warning signs or notices may be provided on other parts of the anti vehicle-mounting apparatus 110. Hazard or warning signs or notices may, for example be provided on the attachment member 112 and/or the first mat portion 150 and/or the second mat portion 152.

In this embodiment of the invention, two pilot lights 182 are provided on the attachment member 112 and two pilot lights 814 are provided on the second mat portion 152 of the mat 114. It will be understood that any number of pilot lights may be provided and that the pilot lights could be provided on the attachment member 112 and/or the mat 114. Furthermore, the pilot lights could be provided on the first mat portion 150 of the mat 114 and/or the second mat portion 152 of the mat 114.

In this embodiment of the invention, a connector 128 with ring members 130a, 130b and shackles 128a, 218b is provided to prevent the elongate sheet or mat 112 twisting during operation of the anti vehicle-mounting apparatus 110. It will be understood that, in alternative embodiments of the invention, alternative connectors may be provided to prevent the elongate sheet or mat 114 twisting during operation of the anti vehicle-mounting apparatus 110. Alternative mechanisms for preventing the mat becoming twisted may also be provided on the anti vehicle-mounting apparatus 110.

In this embodiment of the invention, the driver can use a controller (not shown) within the cab 2 to operate the roller 192 within the apparatus 110 to move the elongate sheet or mat 114 between the stowed and deployed condition. It will be understood that, in alternative embodiments of the invention, the roller 192 could be operated to deploy and/or stow the elongate sheet or mat 114 in response to a signal from the motion sensor 186.

In this embodiment of the invention, the driver can use a controller (not shown) within the cab 2 to operate the roller 192 within the apparatus 110 to move the elongate sheet or mat 114 between the stowed and deployed conditions. In some examples of the invention, the controller may be provided on the dashboard of the vehicle 1. In alternative examples of the invention, the controller may be provided on a portable computer, for example a laptop computer, or smart telephone or tablet. The controllers of these examples may also be used to control one or more of the warning devices, for example the hazard warning lights and/or the vibration alert and/or the camera and/or the pilot lights and/or the motion sensor of the apparatus. Additionally or alternatively, signals may be sent from the hazard warning lights and/or the vibration alert and/or the camera and/or the pilot lights and/or the motion sensor of the apparatus to the controllers of these examples such that, for example, an alert or notification is provided to the driver or other person in the vehicle. The controller may, for example, include a screen on which an alert or notification or picture or video is displayed.

In this embodiment of the invention, a driver can use a controller (not shown) within the cab 2 to deploy the apparatus 110 such that the elongate sheet or mat 114 extends from the rear of the vehicle 1. As the vehicle 1 is driven, the elongate sheet or mat 114 extends behind the vehicle 1. It will be understood that the deployment of the apparatus may be actuated by remote control (operated by a passive infrared motion detector/sensor) or via a wired connection between the controller and the apparatus 110. The remote control and/or the wired examples may employ Global Positioning System (GPS) technology. The apparatus 110 may, for example, automatically be deployed when the controller detects that the vehicle 1 is in a particular location.

The apparatus 110 may employ a self-contained battery (not shown), for example a 6 volt to 12 volt battery, provided within the roller 192 or the attachment member 112. The battery may be rechargeable. The battery may, for example, be rechargeable by connecting the battery to any mains electricity source or to a renewable energy source such as solar panels. Solar panels may, for example, be installed on the vehicle 1.

The motor of this invention may, alternatively, be powered via a wired connection to the vehicle's power supply.

In the above examples, an apparatus 10, 110 is mounted to the rear of a vehicle by a person who is driving the vehicle. It will be understood that an apparatus 110 according to the present invention could be installed on a vehicle during manufacture of the trailer or the vehicle.

## Claims

1. An anti vehicle-mounting apparatus (110) to prevent a person from mounting a vehicle, the anti vehicle-mounting apparatus (110) including:
an attachment member (112) including a connector (128) for removable attachment to the rear of a vehicle, the anti vehicle-mounting apparatus (110) being **characterised in that** the attachment member (112) includes a warning device; and,
the anti vehicle-mounting apparatus (110) further includes:
a roller (192);
an elongate sheet (114) that is attached to the roller (192); and,
a motor (198);
wherein the motor (198) is operable to move the elongate sheet (114) between a first, stowed, condition in which the elongate sheet (114) is wrapped around the roller (192), and a second, deployed, condition in which the elongate sheet (114) is unwrapped from around the roller (192) and extends from the attachment member (112).

2. An anti vehicle-mounting apparatus (110) according to claim 1, wherein the motor (198) is operable to automatically move the elongate sheet (114) between the first, stowed, condition and the second, deployed, condition.

3. An anti vehicle-mounting apparatus (110) according to claim 1 or claim 2, wherein the connector (128) includes a shackle (128a, 128b).

4. An anti vehicle-mounting apparatus (110) according to claim 1, claim 2 or claim 3, wherein the connector (128) has a first portion (130a, 130b) that is fixedly attached to a second surface (118) of the attachment member (112) and a second portion (132a, 132b) that is configured for removable attachment to a vehicle.

5. An anti vehicle-mounting apparatus (110) according to claim 1, wherein the warning device is mounted on the attachment member (112) or wherein the warning device is mounted on the elongate sheet (114).

6. An anti vehicle-mounting apparatus according to claim 5, wherein the warning device includes a warning light (146a, 146b, 146c).

7. An anti vehicle-mounting apparatus (110) according to claim 5 or claim 6, wherein the warning device includes a vibration alert (148), for example wherein the vibration alert is configured to provide an audible alarm.

8. An anti vehicle-mounting apparatus (110) according to any of claims 1 to 7, wherein the elongate sheet (114) includes a first, upper, surface (162, 172) and a second, lower, surface (164, 174), the first surface (162, 172) including a reflective coating or layer (166, 176).

9. A vehicle (1) including an anti vehicle-mounting apparatus (110) according to any of claims 1 to 8.

## Patentansprüche

1. Einrichtung gegen ein Besteigen eines Fahrzeugs (110), um zu verhindern, dass eine Person ein Fahrzeug besteigt, wobei die Einrichtung gegen das Besteigen eines Fahrzeugs (110) Folgendes einschließt:
ein Befestigungselement (112) einschließlich eines Verbinders (128) für eine entfernbare Befestigung an der Rückseite eines Fahrzeugs, wobei die Einrichtung gegen das Besteigen eines Fahrzeugs (110) **dadurch gekennzeichnet ist, dass** das Befestigungselement (112) eine Warnvorrichtung einschließt; und,
die Einrichtung gegen das Besteigen eines Fahrzeugs (110) ferner Folgendes einschließt:
eine Walze (192);
eine längliche Platte (114), die an der Walze (192) befestigt ist; und,
einen Motor (198);
wobei der Motor (198) betriebsfähig ist, um die längliche Platte (114) zwischen einem ersten verstauten Zustand, in dem die längliche Platte (114) um die Walze (192) herum gewickelt ist, und einem zweiten ausgefahrenen Zustand, in dem die längliche Platte (114) von der Rolle (192) abgewickelt wird und sich aus dem Befestigungselement (112) erstreckt, zu bewegen.

2. Einrichtung gegen das Besteigen eines Fahrzeugs (110) nach Anspruch 1, wobei der Motor (198) betriebsfähig ist, um die längliche Platte (114) automatisch zwischen dem ersten verstauten Zustand und dem zweiten ausgefahrenen Zustand zu bewegen.

3. Einrichtung gegen das Besteigen eines Fahrzeugs (110) nach Anspruch 1 oder 2, wobei der Verbinder (128) einen Schäkel (128a, 128b) einschließt.

4. Einrichtung gegen das Besteigen eines Fahrzeugs (110) nach Anspruch 1, 2 oder 3, wobei der Verbinder (128) einen ersten Abschnitt (130a, 130b), der an einer zweiten Oberfläche (118) des Befestigungselements (112) fest befestigt ist, und einen zweiten Abschnitt (132a, 132b) aufweist, der für die entfernbaren Befestigung an einem Fahrzeug konfiguriert ist.

5. Einrichtung gegen das Besteigen eines Fahrzeugs (110) nach Anspruch 1, wobei die Warnvorrichtung an dem Befestigungselement (112) montiert ist oder wobei die Warnvorrichtung an der länglichen Platte (114) montiert ist.

6. Einrichtung gegen das Besteigen eines Fahrzeugs nach Anspruch 5, wobei die Warnvorrichtung eine Warnleuchte (146a, 146b, 146c) einschließt.

7. Einrichtung gegen das Besteigen eines Fahrzeugs (110) nach Anspruch 5 oder 6, wobei die Warnvorrichtung einen Vibrationsalarm (148) einschließt, beispielsweise wobei der Vibrationsalarm konfiguriert ist, um einen akustischen Alarm bereitzustellen.

8. Einrichtung gegen das Besteigen eines Fahrzeugs (110) nach einem der Ansprüche 1 bis 7, wobei die längliche Platte (114) eine erste obere Oberfläche (162, 172) und eine zweite untere Oberfläche (164, 174) einschließt, wobei die erste Oberfläche (162, 172) eine reflektierende Beschichtung oder Schicht (166, 176) einschließt.

9. Fahrzeug (1), das eine Einrichtung gegen das Besteigen eines Fahrzeugs (110) nach einem der Ansprüche 1 bis 8 einschließt.

## Revendications

1. Appareil anti-escalade de véhicule (110) destiné à empêcher une personne d'escalader un véhicule, l'appareil anti-escalade de véhicule (110) comportant :
un élément d'attache (112) comportant un connecteur (128) pour une fixation amovible à l'arrière d'un véhicule, l'appareil anti-escalade de véhicule (110) étant **caractérisé en ce que** l'élément d'attache (112) comporte un dispositif d'avertissement ; et,
l'appareil anti-escalade de véhicule (110) comporte en outre :
un rouleau (192) ;
une feuille allongée (114) qui est fixée au rouleau (192) ; et,
un moteur (198) ;
dans lequel le moteur (198) peut fonctionner pour déplacer la feuille allongée (114) entre un premier état replié dans lequel la feuille allongée (114) est enroulée autour du rouleau (192), et un second état déployé dans lequel la feuille allongée (114) est déroulée autour du rouleau (192) et s'étend depuis l'élément d'attache (112).

2. Appareil anti-escalade de véhicule (110) selon la revendication 1, dans lequel le moteur (198) peut fonctionner pour déplacer automatiquement la feuille allongée (114) entre le premier état replié et le second état déployé.

3. Appareil anti-escalade de véhicule (110) selon la revendication 1 ou la revendication 2, dans lequel le connecteur (128) comporte une manille (128a, 128b).

4. Appareil anti-escalade de véhicule (110) selon la revendication 1, la revendication 2 ou la revendication 3, dans lequel le connecteur (128) présente une première partie (130a, 130b) qui est attachée de manière fixe à une seconde surface (118) de l'élément d'attache (112) et une seconde partie (132a, 132b) qui est conçue pour une attache amovible à un véhicule.

5. Appareil anti-escalade de véhicule (110) selon la revendication 1, dans lequel le dispositif d'avertissement est monté sur l'élément d'attache (112) ou dans lequel le dispositif d'avertissement est monté sur la feuille allongée (114).

6. Appareil anti-escalade de véhicule selon la revendication 5, dans lequel le dispositif d'avertissement comporte un voyant (146a, 146b, 146c).

7. Appareil anti-escalade de véhicule (110) selon la revendication 5 ou la revendication 6, dans lequel le dispositif d'avertissement comporte une alerte de vibration (148), par exemple dans lequel l'alerte de vibration est configurée pour fournir une alarme sonore.

8. Appareil anti-escalade de véhicule (110) selon l'une quelconque des revendications 1 à 7, dans lequel la feuille allongée (114) comporte une première surface supérieure (162, 172) et une seconde surface inférieure (164, 174), la première surface (162, 172) comportant un revêtement ou une couche réfléchissante (166, 176).

9. Véhicule (1) comportant un appareil anti-escalade de véhicule (110) selon l'une quelconque des revendications 1 à 8.
